# EUROPEAN PATENT SPECIFICATION

(11) **EP 3 432 648 B1**
(45) Date of publication and mention of the grant of the patent: **29.04.2020**
(21) Application number: 17181895.8
(22) Date of filing: 18.07.2017
(51) Int. Cl.: H04W 52/02

(54) **A COMMUNICATION DEVICE FOR COMMUNICATING OVER A COMMUNICATION NETWORK**
DRAHTLOSKOMMUNIKATIONSVORRICHTUNG FÜR KOMMUNIKATION ÜBER EIN KOMMUNIKATIONSNETZ
DISPOSITIF DE COMMUNICATION SANS FIL POUR LA COMMUNICATION DANS UN RÉSEAU DE COMMUNICATION SANS FIL

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- EP-A1- 2 999 276
- US-A1- 2004 217 881

## Description

### TECHNICAL FIELD

In general, the invention relates to the field of wireless communication networks. More specifically, the invention relates to communication devices, methods and communication systems based on Low-Power Wide-Area (LPWA) technology, in particular Narrowband loT (NB loT) technology.

### TECHNICAL BACKGROUND

Narrowband loT (NB loT) is a new technology standard, designed to broaden the future of loT connectivity. Ratified by the 3GPP, NB loT is starting to be deployed by mobile network operators across the globe. NB loT is a Low-Power Wide-Area (LPWA) technology, developed to enable efficient communication for massively distributed communication devices across wide geographical areas and deep within urban infrastructure. NB loT technology is ideal for communication devices that generate low data traffic, rely on batteries and typically have a long life cycle. A battery life of more than 10 years may be supported for a wide range of use cases.

Moreover, NB loT technology significantly improves the system capacity and spectrum efficiency, especially in deep coverage. Thus, NB loT technology can be used to connect simple communication devices, such as sensors, to drive new data streams, reduce operational costs and create new business models. Smart meters, smart bins, environmental monitoring and precision agriculture are just a few exemplary applications of NB loT technology. Due to the limited hardware resources of communication devices based on LPWA technology and, in particular, NB loT technology, established mechanisms known, for instance, from smartphones may typically not be used for such communication devices. Thus, there is a need for improved communication devices, methods and communication systems based on LPWA technology, in particular NB loT technology.

In US 2004/0217881 A1, a modular wireless integrated network sensor (WINS) node with a dual bus architecture is disclosed. Each node includes power supply, data acquisition, programmable microprocessor and wireless transceiver modules that communicate data and instructions over a bus. The bus includes a signal bus for communicating instructions and low bandwidth data, and a high-capacity data bus for transferring high bandwidth data and executing high power tasks.

In EP 2 999 276 A1, a method and terminal for reporting sensor data is disclosed. A processor may keep in a sleep state when only a sensor is working, and a sensor hub with low power consumption may temporarily store data, thereby reducing an overall power consumption.

### SUMMARY

It is an object of the invention to provide improved communication devices, methods and communication systems for communicating over a communication network, in particular for relaying data over a communication network based on LPWA and/or NB loT technology.

The foregoing and other objects are achieved by the subject matter of the independent claims. Further implementation forms are apparent from the dependent claims, the description and the figures.

The invention is based on the finding, that an application processor of a communication device may not be involved in specific regular operations of a communication interface of the communication device, such as relaying of relay data or transmission of management data. The application processor may be configured to remain in a power save mode (PSM) during these kinds of operations; thereby increasing an energy-efficiency of the communication device, which is particularly advantageous using LPWA and/or NB loT technology.

According to a first aspect, the invention relates to a communication device for communicating over a communication network. The communication device comprises a memory comprising an application data portion for storing application data, and a relay data portion for storing relay data. The communication device further comprises an application processor configured to operate in one of an execution mode and a power save mode, wherein, in the execution mode, the application processor is configured to execute an application program based on the application data. The communication device further comprises a communication interface configured to operate in a relay mode, wherein, in the relay mode, the communication interface is configured to receive the relay data from a first neighboring communication device over the communication network, to store the relay data in the relay data portion, to read the relay data from the relay data portion, and to transmit the relay data to a second neighboring communication device over the communication network. The application processor is configured to maintain operation in the power save mode during operation of the communication interface in the relay mode. The communication device allows for an increased energy-efficiency during operation of the communication device within the communication network.

The application processor may not be involved in any operations performed by the communication interface in the relay mode. Consequently, the application processor may not be waked up from the power save mode during operation of the communication interface in the relay mode.

In an implementation form, the memory further comprises a management data portion for storing management data, wherein the communication interface is further configured to operate in a management data transmission mode, wherein, in the management data transmission mode, the communication interface is configured to read the management data from the management data portion, and to transmit the management data to the second neighboring communication device over the communication network, and wherein the application processor is configured to maintain operation in the power save mode during operation of the communication interface in the management data transmission mode. The management data may be associated with the communication device.

The application processor may not be involved in any operations performed by the communication interface in the management data transmission mode. Consequently, the application processor may not be waked up from the power save mode during operation of the communication interface in the management data transmission mode.

In an implementation form, wherein the management data comprises a routing table, wherein the communication interface is configured to transmit the relay data or the management data to the second neighboring communication device based on the routing table. The routing table may indicate a respective communication address of the first neighboring communication device and/or the second neighboring communication device within the communication network.

In an implementation form, the management data comprises a data counter indicating a data volume of the relay data or the management data transmitted by the communication interface to the second neighboring communication device. The data volume may e.g. be represented by a number of bits or bytes.

In an implementation form, the communication device comprises a battery configured to supply the communication device with electrical energy, wherein the management data comprises a battery status indicator indicating a battery status of the battery. The battery status may e.g. represent a health parameter of the battery, or an energy level of energy stored within the battery.

In an implementation form, the communication device comprises a global navigation satellite system receiver configured to determine a geographic position of the communication device, wherein the management data comprises a position indicator indicating the geographic position of the communication device. The geographic position of the communication device may e.g. be represented by a latitude and a longitude of the communication device.

In an implementation form, the global navigation satellite system receiver is configured to operate in a position acquisition mode, wherein the application processor is configured to maintain operation in the power save mode during operation of the global navigation satellite system receiver in the position acquisition mode.

The global navigation satellite system receiver acquires the geographic position of the communication device in the position acquisition mode. The application processor may not be waked up from the power save mode during operation of the global navigation satellite system receiver in the position acquisition mode.

In an implementation form, the communication device comprises a sensor configured to sense a physical parameter in a surrounding of the communication device, wherein the management data comprises the physical parameter. The physical parameter may e.g. indicate a temperature or an air pressure in the surrounding of the communication device.

In an implementation form, the sensor is configured to operate in a sensing mode, wherein the application processor is configured to maintain operation in the power save mode during operation of the sensor in the sensing mode.

The sensor senses the physical parameter in the surrounding of the communication device in the sensing mode. The application processor may not be waked up from the power save mode during operation of the sensor in the sensing mode.

In an implementation form, the communication interface is further configured to operate in a deactivated mode. The communication interface is configured to switch from the relay mode or the management data transmission mode to the deactivated mode, if the transmission of the relay data or the transmission of the management data to the second neighboring communication device is finished.

In an implementation form, the application processor is configured to initiate a change between the execution mode and the power save mode based on a mode change indicator provided by the application program. The mode change indicator may e.g. be provided by the application program, if execution of the application program may be halted temporarily.

In an implementation form, the communication device further comprises a security enclave configured to authenticate the communication device within the communication network, wherein the security enclave comprises the memory of the communication device. The security enclave can allow for a reliable and secure implementation of the memory of the communication device. The security enclave may hold or store network authentication credentials for registering and/or authenticating the communication device within the communication network. The security enclave may further be configured to identify the communication device within the communication network.

According to a second aspect, the invention relates to a communication system for communicating over a communication network. The communication system comprises a communication device according to the first aspect of the invention, a first neighboring communication device configured to transmit relay data to the communication device over the communication network, and a second neighboring communication device configured to receive the relay data from the communication device over the communication network.

In an implementation form, the communication system further comprises a third neighboring communication device, wherein the second neighboring communication device is configured to transmit the relay data to the third neighboring communication device over the communication network.

The first neighboring communication device, the second neighboring communication device and/or the third neighboring communication device may have the same features and/or the same functionality as the communication device according to the first aspect of the invention.

In an implementation form, the communication network is a multi-hop device-to-device communication network, in particular an LPWA communication network or a NB loT communication network.

According to a third aspect, the invention relates to a method of operating a communication device for communicating over a communication network, wherein the communication device comprises a memory, an application processor and a communication interface. The memory comprises an application data portion for storing application data, and a relay data portion for storing relay data. The application processor is configured to operate in one of an execution mode and a power save mode. The communication interface is configured to operate in a relay mode. The application processor is configured to maintain operation in the power save mode during operation of the communication interface in the relay mode. The method comprises executing, in the execution mode, by the application processor, an application program based on the application data, receiving, in the relay mode, by the communication interface, the relay data from a first neighboring communication device over the communication network, storing, in the relay mode, by the communication interface, the relay data in the relay data portion, reading, in the relay mode, by the communication interface, the relay data from the relay data portion, and transmitting, in the relay mode, by the communication interface, the relay data to a second neighboring communication device over the communication network.

The method may be performed by the communication device. Further features of the method directly result from the features and/or the functionality of the communication device.

According to a fourth aspect, the invention relates to a computer program for performing the method according to the third aspect of the invention when executed on a communication device.

The invention can be implemented in hardware and/or software.

### BRIEF DESCRIPTION OF THE FIGURES

Implementation forms of the invention will be described with respect to the following figures, in which:
Fig. 1 shows a schematic diagram of a communication device for communicating over a communication network;
Fig. 2 shows a schematic diagram of a communication system for communicating over a communication network;
Fig. 3 shows a schematic diagram of a method of operating a communication device for communicating over a communication network;
Fig. 4 shows a schematic diagram of a communication device for communicating over a communication network; and
Fig. 5 shows a schematic diagram of a communication system for communicating over a communication network.

### DETAILED DESCRIPTION OF THE FIGURES

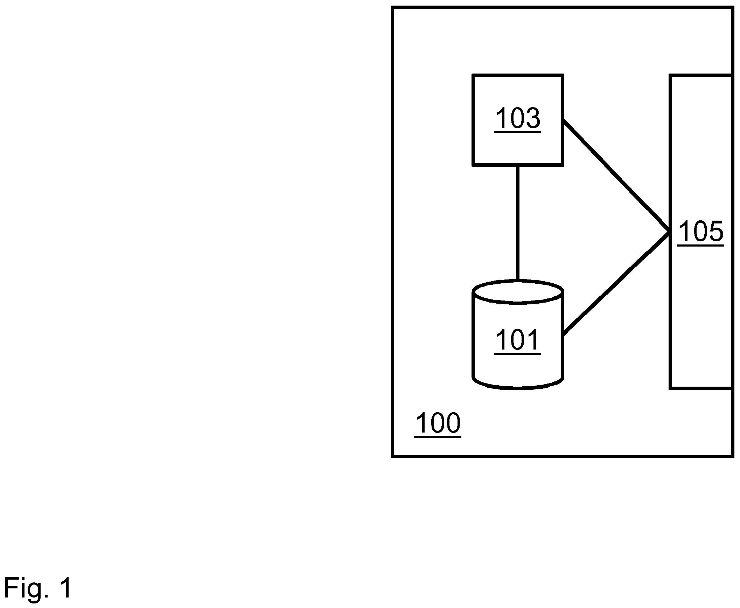

Fig. 1 shows a schematic diagram of a communication device 100 for communicating over a communication network. The communication device 100 comprises a memory 101 comprising an application data portion for storing application data, and a relay data portion for storing relay data. The communication device 100 further comprises an application processor 103 configured to operate in one of an execution mode and a power save mode, wherein, in the execution mode, the application processor 103 is configured to execute an application program based on the application data. The communication device 100 further comprises a communication interface 105 configured to operate in a relay mode, wherein, in the relay mode, the communication interface 105 is configured to receive the relay data from a first neighboring communication device over the communication network, to store the relay data in the relay data portion, to read the relay data from the relay data portion, and to transmit the relay data to a second neighboring communication device over the communication network. The application processor 103 is configured to maintain operation in the power save mode during operation of the communication interface 105 in the relay mode.

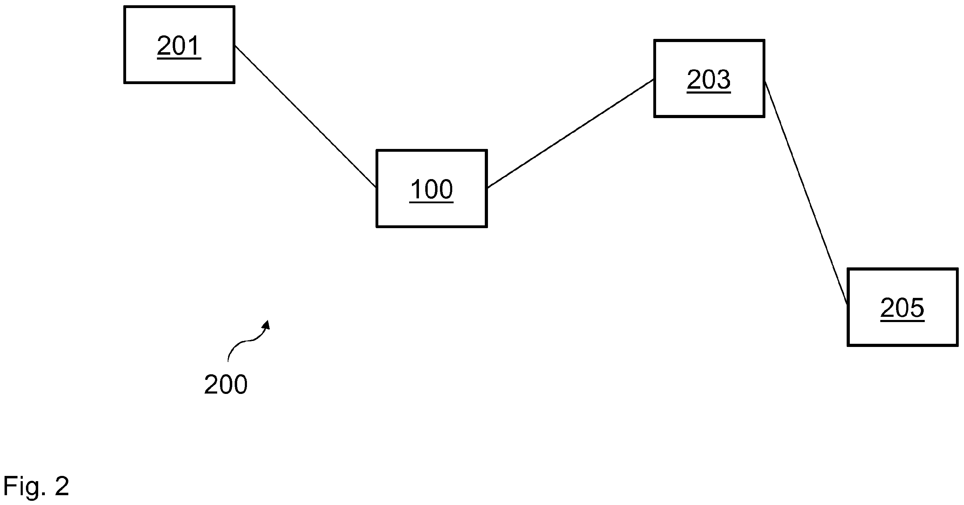

Fig. 2 shows a schematic diagram of a communication system 200 for communicating over a communication network. The communication system 200 comprises a communication device 100, a first neighboring communication device 201 configured to transmit relay data to the communication device 100 over the communication network, a second neighboring communication device 203 configured to receive the relay data from the communication device 100 over the communication network, and a third neighboring communication device 205. The second neighboring communication device 203 is configured to transmit the relay data to the third neighboring communication device 205 over the communication network.

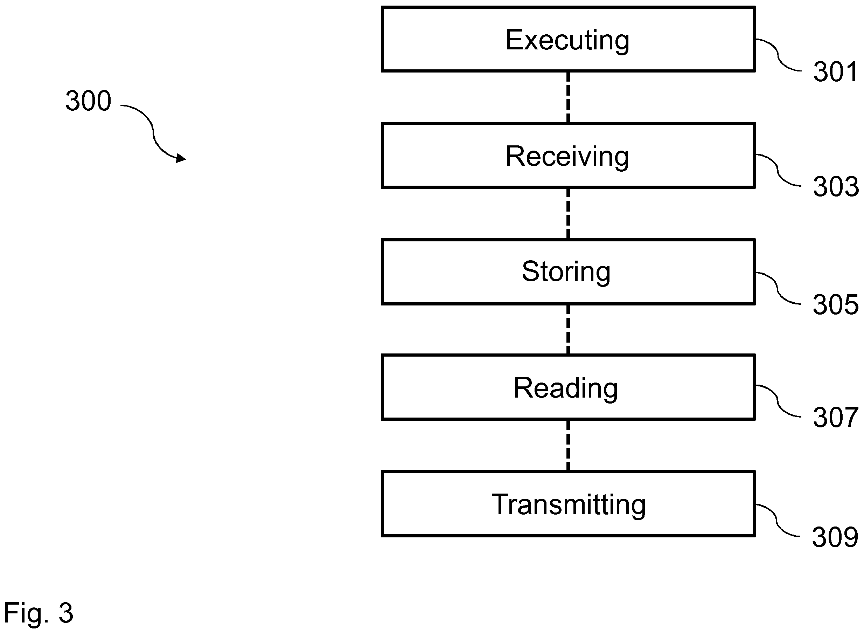

Fig. 3 shows a schematic diagram of a method 300 of operating a communication device for communicating over a communication network. The communication device comprises a memory, an application processor and a communication interface. The memory comprises an application data portion for storing application data, and a relay data portion for storing relay data. The application processor is configured to operate in one of an execution mode and a power save mode. The communication interface is configured to operate in a relay mode. The application processor is configured to maintain operation in the power save mode during operation of the communication interface in the relay mode. The method 300 comprises executing 301, in the execution mode, by the application processor, an application program based on the application data, receiving 303, in the relay mode, by the communication interface, the relay data from a first neighboring communication device over the communication network, storing 305, in the relay mode, by the communication interface, the relay data in the relay data portion, reading 307, in the relay mode, by the communication interface, the relay data from the relay data portion, and transmitting 309, in the relay mode, by the communication interface, the relay data to a second neighboring communication device over the communication network.

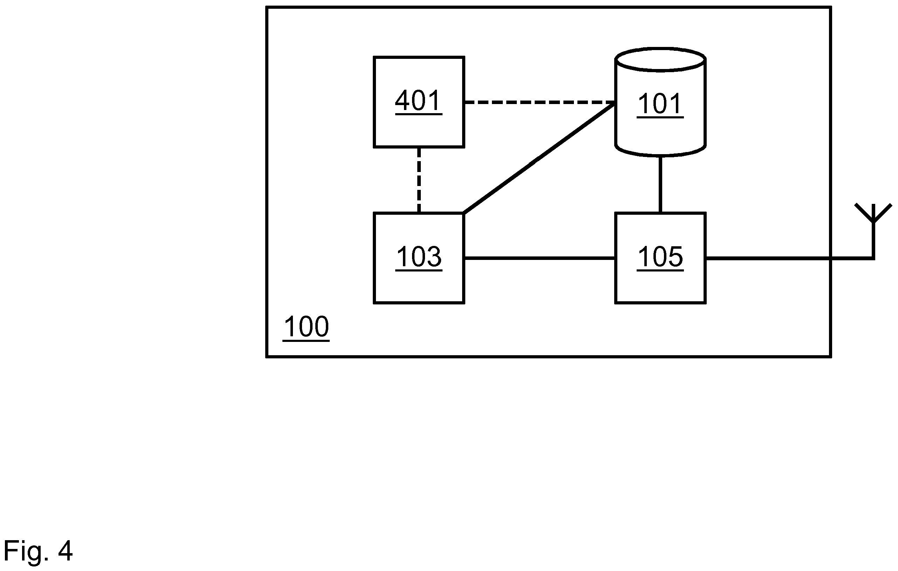

Fig. 4 shows a schematic diagram of a communication device 100 for communicating over a communication network. The communication device 100 comprises a memory 101 comprising an application data portion for storing application data, a relay data portion for storing relay data, and a management data portion for storing management data. The memory 101 may be comprised by a security enclave, e.g. a subscriber identity module (SIM), of the communication device 100. The communication device 100 further comprises an application processor 103 configured to operate in one of an execution mode and a power save mode, wherein, in the execution mode, the application processor 103 is configured to execute an application program based on the application data. The communication device 100 further comprises a communication interface 105 configured to operate in a relay mode, wherein, in the relay mode, the communication interface 105 is configured to receive the relay data from a first neighboring communication device over the communication network, to store the relay data in the relay data portion, to read the relay data from the relay data portion, and to transmit the relay data to a second neighboring communication device over the communication network. The application processor 103 is configured to maintain operation in the power save mode during operation of the communication interface 105 in the relay mode.

The communication interface 105 may further be configured to operate in a management data transmission mode, wherein, in the management data transmission mode, the communication interface 105 is configured to read the management data from the management data portion, and to transmit the management data to the second neighboring communication device over the communication network. The application processor 103 may be configured to maintain operation in the power save mode during operation of the communication interface 105 in the management data transmission mode.

The communication device 100 may further comprise a sensor 401 for sensing physical parameters, such as a temperature or an air pressure, in the surrounding of the communication device 100. The management data stored in the management data portion of the memory 101 may comprise the physical parameter. The sensor 401 may further be connected to the application processor 103 for direct interaction with the application program during operation of the application processor 103 in the execution mode.

The concept allows for an energy-efficient and secure storage and transmission of relay data and/or management data using LPWA technology and/or NB loT technology. These technologies have specifically been designed to meet the needs of the Internet-of-Things (loT). Main characteristics are low data rates (usually some 100bit/s to 250 kbit/s), wide coverage and/or deep indoor penetration, long battery lifetime of the communication devices, standardization by the 3GPP, operation within a licensed spectrum of a mobile network operator, identification and authentication within a communication network using an IMSI via a security enclave, e.g. a subscriber identity module (SIM). These technologies are well suited for communication devices for Internet-of-Things (loT) applications. Such communication devices usually transmit a low amount of data within long time intervals and therefore only require a low data rate. Most of such communication devices are equipped with a battery. Exemplary applications of such devices are smart water meters, sensors for detecting unused parking lots, i.e. smart parking, etc. The battery lifetime is particularly relevant for the base functionality of the communication devices as well as for the application scenarios intended by the manufacturer of the communication devices. The increased battery lifetime may e.g. be achieved using an improved power save mode (PSM) and extended discontinuous reception (eDRX).

Typically, a plurality of components of such communication devices, e.g. a communication interface and an application processor / an application data portion, have to be waked up for the transmission of relay data or management data by the communication interface. This may lead to an increased power consumption, particularly if relay data or management data is transmitted multiple times or if the communication devices are used as a hub in a multi-hop device-to-device (D2D) communication network. Furthermore, the relay data and the management data may not be stored securely. Also for transmitting the management data, indicating e.g. a coverage class, a geographic position, or a battery status, the application processor / the application data portion may be waked up, although an interaction with these components may actually not be required. Furthermore, it may be difficult to transmit different kinds of data, e.g. application data associated with a communication device, management data associated with the communication device, and relay data associated with another communication device, within a multi-hop device-to-device (D2D) communication network as energy-efficient and as secure as possible.

For this purpose, the application data, the management data, and the relay data may be stored within the memory 101 of a security enclave, e.g. a subscriber identity module (SIM), of the communication device 100. The memory 101 of the security enclave may provide an increased security for storing data within the communication device 100. For communicating using the communication interface 105, the application processor 103 / the application data portion may not be waked up. Only relevant components of the communication device 100, i.e. the communication interface 105 and possibly the memory 101 of the security enclave, e.g. the subscriber identity module (SIM), may be turned on for the communication. All other components of the communication device 100 may remain in a power save mode or a deactivated mode for an increased energy-efficiency of the communication device 100.

In particular in multi-hop device-to-device (D2D) communication networks, if the communication device 100 is used as a host, the energy-efficiency may be increased by only partially using the components of the communication device 100. Therefore, the lifetime of the communication device 100 may positively be affected.

For this purpose, the data may be separated into three kinds of data: application data associated with the communication device 100, management data associated with the communication device 100, and relay data associated with another communication device.

The management data may e.g. indicate a battery status, a number of previous transmissions, i.e. own transmissions or multi-hop transmissions, a geographic position provided by the GNSS receiver, wherein a synchronization with the application processor 103 may be performed in the execution mode of the application processor 103, a routing table comprising information relating to the neighboring communication devices 201, 203, 205, wake-up times for multi-hop communications and last valid routing information for reachable communication devices 201, 203, 205.

Different advantages may be achieved by the concept. Within a multi-hop device-to-device (D2D) communication network, relay data transmitted from other communication devices to the communication device 100 as a host may be securely stored until relaying the relay data. Therefore, external access as well as access by the communication device 100 on the relay data may be impeded. The application data may be stored in a secure portion of the memory 101 of the security enclave, e.g. the subscriber identity module (SIM), and may be protected against external attacks. The management data may be stored in a secure portion of the memory 101 of the security enclave and may be protected against external attacks. Furthermore, the energy-efficiency of the communication device 100 may be improved.

Within a multi-hop device-to-device (D2D) communication network, the application processor 103 / the application data portion may not be waked up or turned on for receiving and transmitting the relay data or for transmitting the management data; thereby positively affecting the energy-efficiency of the communication device 100. The application data may be securely stored and may only be transmitted using the communication interface 105 and the memory 101 of the security enclave, e.g. the subscriber identity module (SIM), if both components wake up e.g. using extended discontinuous reception (eDRX) or responsive to the end of the power save mode (PSM) and interact with the communication network. The application processor 103 / the application data portion may not be waked up for the communication.

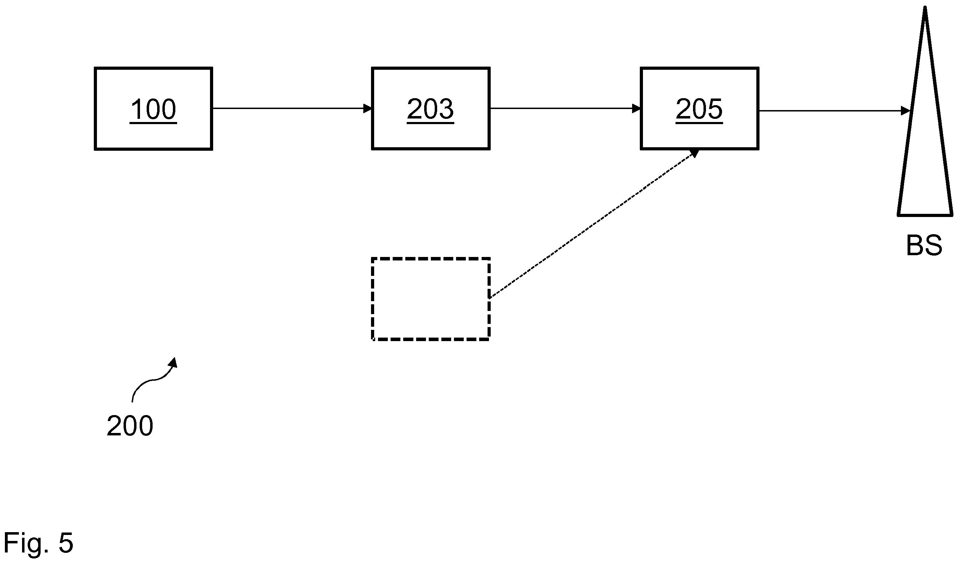

Fig. 5 shows a schematic diagram of a communication system 200 for communicating over a communication network. The communication system 200 comprises a communication device 100, a first neighboring communication device (not shown), a second neighboring communication device 203, a third neighboring communication device 205, and a base station BS. The first neighboring communication device (not shown) is configured to transmit relay data to the communication device 100 over the communication network. The second neighboring communication device 203 is configured to receive the relay data from the communication device 100 over the communication network, and to transmit the relay data to the third neighboring communication device 205. The third neighboring communication device 205 configured to receive the relay data from the second neighboring communication device 203 over the communication network, and to transmit the relay data to the base station BS over the communication network. The third neighboring communication device 205 may be configured to receive further relay data from another communication device over the communication network, and to transmit the further relay data to the base station BS over the communication network. The second neighboring communication device 203 and the third neighboring communication device 205 may be used as host devices within the communication network. The communication network may be realized as a multi-hop device-to-device communication network, in particular an LPWA communication network or a NB loT communication network.

### REFERENCE SIGNS

- 100: Communication device
- 101: Memory
- 103: Application processor
- 105: Communication interface

- 200: Communication system
- 201: First neighboring communication device
- 203: Second neighboring communication device
- 205: Third neighboring communication device

- 300: Method
- 301: Executing
- 303: Receiving
- 305: Storing
- 307: Reading
- 309: Transmitting

- 401: Sensor

- BS: Base station

## Claims

1. A communication device (100) for communicating over a wireless communication network, the communication device (100) comprising:
a memory (101) comprising an application data portion for storing application data, a relay data portion for storing relay data, and a management data portion for storing management data;
an application processor (103) configured to operate in one of an execution mode and a power save mode, PSM, wherein, in the execution mode, the application processor (103) is configured to execute an application program based on the application data;
a sensor (401) configured to sense a physical parameter in a surrounding of the communication device (100), wherein the management data comprises the physical parameter; and
a communication interface (105) configured to operate in a relay mode and in a management data transmission mode, wherein, in the relay mode, the communication interface (105) is configured to receive the relay data from a first neighboring communication device (201) over the wireless communication network, to store the relay data in the relay data portion, to read the relay data from the relay data portion, and to transmit the relay data to a second neighboring communication device (203) over the wireless communication network, and wherein, in the management data transmission mode, the communication interface (105) is configured to read the management data from the management data portion, and to transmit the management data to the second neighboring communication device (203) over the wireless communication network;
wherein the application processor (103) is configured to maintain operation in the power save mode, PSM, during operation of the communication interface (105) in the relay mode and in the management data transmission mode.

2. The communication device (100) of claim 1, wherein the management data comprises a routing table, and wherein the communication interface (105) is configured to transmit the relay data or the management data to the second neighboring communication device (203) based on the routing table.

3. The communication device (100) of any one of the claims 1 or 2, wherein the management data comprises a data counter indicating a data volume of the relay data or the management data transmitted by the communication interface (105) to the second neighboring communication device (203).

4. The communication device (100) of any one of the claims 1 to 3, wherein the communication device (100) comprises a battery configured to supply the communication device (100) with electrical energy, wherein the management data comprises a battery status indicator indicating a battery status of the battery.

5. The communication device (100) of any one of the claims 1 to 4, wherein the communication device (100) comprises a global navigation satellite system, GNSS, (01100) receiver configured to determine a geographic position of the communication device (100), wherein the management data comprises a position indicator indicating the geographic position of the communication device (100).

6. The communication device (100) of claim 5, wherein the global navigation satellite system, GNSS, receiver is configured to operate in a position acquisition mode, and wherein the application processor (103) is configured to maintain operation in the power save mode, PSM, during operation of the global navigation satellite system, GNSS, receiver in the position acquisition mode.

7. The communication device (100) of any one of the preceding claims, wherein the application processor (103) is configured to initiate a change between the execution mode and the power save mode, PSM, based on a mode change indicator provided by the application program.

8. The communication device (100) of any one of the preceding claims, further comprising:
a security enclave configured to authenticate the communication device (100) within the wireless communication network;
wherein the security enclave comprises the memory (101) of the communication device (100).

9. A communication system (200) for communicating over a communication network, the communication system (200) comprising:
a communication device (100) of any one of the claims 1 to 8;
a first neighboring communication device (201) configured to transmit relay data to the communication device (100) over the wireless communication network; and
a second neighboring communication device (203) configured to receive the relay data from the communication device (100) over the wireless communication network.

10. The communication system (200) of claim 9, further comprising:
a third neighboring communication device (205);
wherein the second neighboring communication device (203) is configured to transmit the relay data to the third neighboring communication device (205) over the wireless communication network.

11. The communication system (200) of any one of the claims 9 or 10, wherein the communication network is a multi-hop device-to-device, D2D, wireless communication network.

12. A method (300) of operating a communication device (100) for communicating over a wireless communication network, wherein the communication device (100) comprises a memory (101), an application processor (103), a sensor (401), and a communication interface (105), wherein the memory (101) comprises an application data portion for storing application data, a relay data portion for storing relay data, and a management data portion for storing management data, wherein the application processor (103) is configured to operate in one of an execution mode and a power save mode (PSM), wherein the communication interface (105) is configured to operate in a relay mode and in a management data transmission mode, wherein the application processor (103) is configured to maintain operation in the power save mode, PSM, during operation of the communication interface (105) in the relay mode and in the management data transmission mode, the method (300) comprising: sensing, by the sensor (401), a physical parameter in a surrounding of the communication device (100), wherein the management data comprises the physical parameter;
executing (301), in the execution mode, by the application processor (103), an application program based on the application data;
receiving (303), in the relay mode, by the communication interface (105), the relay data from a first neighboring communication device (201) over the wireless communication network;
storing (305), in the relay mode, by the communication interface (105), the relay data in the relay data portion;
reading (307), in the relay mode, by the communication interface (105), the relay data from the relay data portion;
transmitting (309), in the relay mode, by the communication interface (105), the relay data to a second neighboring communication device (203) over the wireless communication network; reading, in the management data transmission mode, by the communication interface (105), the management data from the management data portion; and
transmitting, in the management data transmission mode, by the communication interface (105), the management data to the second neighboring communication device (203) over the wireless communication network.

13. A computer program for performing the method (300) of claim 12 when executed on a communication device (100).

## Patentansprüche

1. Kommunikationsvorrichtung (100) zum Kommunizieren über ein drahtloses Kommunikationsnetzwerk, die Kommunikationsvorrichtung (100) umfassend:
einen Speicher (101), der einen Anwendungsdatenabschnitt zum Speichern von Anwendungsdaten, einen Relaisdatenabschnitt zum Speichern von Relaisdaten und einen Verwaltungsdatenabschnitt zum Speichern von Verwaltungsdaten umfasst;
einen Anwendungsprozessor (103), der konfiguriert ist, in einem von einem Ausführungsmodus und einem Energiesparmodus (PSM) zu arbeiten, wobei der Anwendungsprozessor (103), in dem Ausführungsmodus, konfiguriert ist, ein Anwendungsprogramm basierend auf den Anwendungsdaten auszuführen;
einen Sensor (401), der konfiguriert ist, einen physikalischen Parameter in einer Umgebung der Kommunikationsvorrichtung (100) zu erfassen, wobei die Verwaltungsdaten den physikalischen Parameter umfassen; und
eine Kommunikationsschnittstelle (105), die konfiguriert ist, in einem Relaismodus und in einem Verwaltungsdaten-Übertragungsmodus zu arbeiten, wobei die Kommunikationsschnittstelle (105), in dem Relaismodus, konfiguriert ist, die Relaisdaten über das drahtlose Kommunikationsnetzwerk von einer ersten benachbarten Kommunikationsvorrichtung (201) zu empfangen, die Relaisdaten in dem Relaisdatenabschnitt zu speichern, die Relaisdaten aus dem Relaisdatenabschnitt zu lesen und die Relaisdaten über das drahtlose Kommunikationsnetzwerk an eine zweite benachbarte Kommunikationsvorrichtung (203) zu übertragen, und wobei die Kommunikationsschnittstelle (105), in dem Verwaltungsdaten-Übertragungsmodus, konfiguriert ist, die Verwaltungsdaten aus dem Verwaltungsdatenabschnitt zu lesen und die Verwaltungsdaten über das drahtlose Kommunikationsnetzwerk an die zweite benachbarte Kommunikationsvorrichtung (203) zu übertragen;
wobei der Anwendungsprozessor (103) konfiguriert ist, den Betrieb im Energiesparmodus (PSM) während eines Betriebs der Kommunikationsschnittstelle (105) im Relaismodus und im Verwaltungsdaten-Übertragungsmodus beizubehalten.

2. Kommunikationsvorrichtung (100) nach Anspruch 1, wobei die Verwaltungsdaten eine Routing-Tabelle umfassen, und wobei die Kommunikationsschnittstelle (105) konfiguriert ist, die Relaisdaten oder die Verwaltungsdaten basierend auf der Routing-Tabelle an die zweite benachbarte Kommunikationsvorrichtung (203) zu übertragen.

3. Kommunikationsvorrichtung (100) nach einem der Ansprüche 1 oder 2, wobei die Verwaltungsdaten einen Datenzähler umfassen, der ein Datenvolumen der Relaisdaten oder der Verwaltungsdaten anzeigt, die durch die Kommunikationsschnittstelle (105) an die zweite benachbarte Kommunikationsvorrichtung (203) übertragen werden.

4. Kommunikationsvorrichtung (100) nach einem der Ansprüche 1 bis 3, wobei die Kommunikationsvorrichtung (100) eine Batterie umfasst, die konfiguriert ist, die Kommunikationsvorrichtung (100) mit elektrischer Energie zu versorgen, wobei die Verwaltungsdaten eine Batteriestatusanzeige umfassen, die einen Batteriestatus der Batterie anzeigt.

5. Kommunikationsvorrichtung (100) nach einem der Ansprüche 1 bis 4, wobei die Kommunikationsvorrichtung (100) einen Empfänger für ein globales Satellitennavigationssystem (GNSS) umfasst, der konfiguriert ist, einen geografischen Standort der Kommunikationsvorrichtung (100) zu bestimmen, wobei die Verwaltungsdaten eine Standortanzeige umfassen, die den geografischen Standort der Kommunikationsvorrichtung (100) anzeigt.

6. Kommunikationsvorrichtung (100) nach Anspruch 5, wobei der Empfänger für das globale Satellitennavigationssystem (GNSS) konfiguriert ist, in einem Standorterfassungsmodus zu arbeiten, und wobei der Anwendungsprozessor (103) konfiguriert ist, den Betrieb im Energiesparmodus (PSM) während eines Betriebs des Empfängers für das globale Satellitennavigationssystem (GNSS) im Standorterfassungsmodus beizubehalten.

7. Kommunikationsvorrichtung (100) nach einem der vorhergehenden Ansprüche, wobei der Anwendungsprozessor (103) konfiguriert ist, einen Wechsel zwischen dem Ausführungsmodus und dem Energiesparmodus (PSM) basierend auf einer Moduswechselanzeige zu initiieren, die durch das Anwendungsprogramm bereitgestellt wird.

8. Kommunikationsvorrichtung (100) nach einem der vorhergehenden Ansprüche, ferner umfassend:
eine Sicherheitsenklave, die konfiguriert ist, die Kommunikationsvorrichtung (100) innerhalb des drahtlosen Kommunikationsnetzwerks zu authentifizieren;
wobei die Sicherheitsenklave den Speicher (101) der Kommunikationsvorrichtung (100) umfasst.

9. Kommunikationssystem (200) zum Kommunizieren über ein Kommunikationsnetzwerk, das Kommunikationssystem (200) umfassend:
eine Kommunikationsvorrichtung (100) nach einem der Ansprüche 1 bis 8;
eine erste benachbarte Kommunikationsvorrichtung (201), die konfiguriert ist, Relaisdaten über das drahtlose Kommunikationsnetzwerk an die Kommunikationsvorrichtung (100) zu übertragen; und
eine zweite benachbarte Kommunikationsvorrichtung (203), die konfiguriert ist, die Relaisdaten über das drahtlose Kommunikationsnetzwerk von der Kommunikationsvorrichtung (100) zu empfangen.

10. Kommunikationssystem (200) nach Anspruch 9, ferner umfassend:
eine dritte benachbarte Kommunikationsvorrichtung (205) ;
wobei die zweite benachbarte Kommunikationsvorrichtung (203) konfiguriert ist, die Relaisdaten über das drahtlose Kommunikationsnetzwerk an die dritte benachbarte Kommunikationsvorrichtung (205) zu übertragen.

11. Kommunikationssystem (200) nach einem der Ansprüche 9 oder 10, wobei das Kommunikationsnetzwerk ein drahtloses Multi-Hop-Device-to-Device(D2D)-Kommunikationsnetzwerk ist.

12. Verfahren (300) zum Betreiben einer Kommunikationsvorrichtung (100) zum Kommunizieren über ein drahtloses Kommunikationsnetzwerk, wobei die Kommunikationsvorrichtung (100) einen Speicher (101), einen Anwendungsprozessor (103), einen Sensor (401) und eine Kommunikationsschnittstelle (105) umfasst, wobei der Speicher (101) einen Anwendungsdatenabschnitt zum Speichern von Anwendungsdaten, einen Relaisdatenabschnitt zum Speichern von Relaisdaten und einen Verwaltungsdatenabschnitt zum Speichern von Verwaltungsdaten umfasst, wobei der Anwendungsprozessor (103) konfiguriert ist, in einem von einem Ausführungsmodus oder einem Energiesparmodus (PSM) zu arbeiten, wobei die Kommunikationsschnittstelle (105) konfiguriert ist, in einem Relaismodus und in einem Verwaltungsdaten-Übertragungsmodus zu arbeiten, wobei der Anwendungsprozessor (103) konfiguriert ist, den Betrieb im Energiesparmodus (PSM) während eines Betriebs der Kommunikationsschnittstelle (105) im Relaismodus und im Verwaltungsdaten-Übertragungsmodus beizubehalten, das Verfahren (300) umfassend:
Erfassen, durch den Sensor (401), eines physikalischen Parameters in einer Umgebung der Kommunikationsvorrichtung (100), wobei die Verwaltungsdaten den physikalischen Parameter umfassen;
Ausführen (301), im Ausführungsmodus, durch den Anwendungsprozessor (103), eines Anwendungsprogramms basierend auf den Anwendungsdaten;
Empfangen (303), im Relaismodus, durch die Kommunikationsschnittstelle (105), der Relaisdaten über das drahtlose Kommunikationsnetzwerk von einer ersten benachbarten Kommunikationsvorrichtung (201);
Speichern (305), im Relaismodus, durch die Kommunikationsschnittstelle (105), der Relaisdaten in dem Relaisdatenabschnitt;
Lesen (307), im Relaismodus, durch die Kommunikationsschnittstelle (105), der Relaisdaten aus dem Relaisdatenabschnitt;
Übertragen (309), im Relaismodus, durch die Kommunikationsschnittstelle (105), der Relaisdaten über das drahtlose Kommunikationsnetzwerk an eine zweite benachbarte Kommunikationsvorrichtung (203);
Lesen, im Verwaltungsdaten-Übertragungsmodus, durch die Kommunikationsschnittstelle (105), der Verwaltungsdaten aus dem Verwaltungsdatenabschnitt; und
Übertragen, im Verwaltungsdaten-Übertragungsmodus, durch die Kommunikationsschnittstelle (105), der Verwaltungsdaten über das drahtlose Kommunikationsnetzwerk an die zweite benachbarte Kommunikationsvorrichtung (203).

13. Computerprogramm zum Durchführen des Verfahrens (300) nach Anspruch 12, wenn es auf einer Kommunikationsvorrichtung (100) ausgeführt wird.

## Revendications

1. Dispositif de communication (100) destiné à communiquer sur un réseau de communication sans fil, le dispositif de communication (100) comprenant :
une mémoire (101) comprenant une portion de données d'application pour mémoriser des données d'application, une portion de données de relais pour mémoriser des données de relais, et une portion de données de gestion pour mémoriser des données de gestion ;
un processeur d'application (103) configuré pour fonctionner dans l'un d'un mode d'exécution et d'un mode d'économie d'énergie, PSM, dans lequel, dans le mode d'exécution, le processeur d'application (103) est configuré pour exécuter un programme d'application sur la base des données d'application ;
un capteur (401) configuré pour détecter un paramètre physique à proximité du dispositif de communication (100), dans lequel les données de gestion comprennent le paramètre physique ; et
une interface de communication (105) configurée pour fonctionner dans un mode de relais et dans un mode de transmission de données de gestion, dans lequel, dans le mode de relais, l'interface de communication (105) est configurée pour recevoir les données de relais en provenance d'un premier dispositif de communication voisin (201) sur le réseau de communication sans fil, mémoriser les données de relais dans la portion de données de relais, lire les données de relais depuis la portion de données de relais, et transmettre les données de relais à destination d'un deuxième dispositif de communication voisin (203) sur le réseau de communication sans fil, et dans lequel, dans le mode de transmission de données de gestion, l'interface de communication (105) est configurée pour lire les données de gestion depuis la portion de données de gestion, et transmettre les données de gestion à destination du deuxième dispositif de communication voisin (203) sur le réseau de communication sans fil ;
dans lequel le processeur d'application (103) est configuré pour maintenir un fonctionnement dans le mode d'économie d'énergie, PSM, pendant un fonctionnement de l'interface de communication (105) dans le mode de relais et dans le mode de transmission de données de gestion.

2. Dispositif de communication (100) selon la revendication 1, dans lequel les données de gestion comprennent une table d'acheminement, et dans lequel l'interface de communication (105) est configurée pour transmettre les données de relais ou les données de gestion à destination du deuxième dispositif de communication voisin (203) sur la base de la table d'acheminement.

3. Dispositif de communication (100) selon la revendication 1 ou 2, dans lequel les données de gestion comprennent un compteur de données indiquant un volume de données des données de relais ou les données de gestion transmises par l'interface de communication (105) à destination du deuxième dispositif de communication voisin (203).

4. Dispositif de communication (100) selon l'une quelconque des revendications 1 à 3, dans lequel le dispositif de communication (100) comprend une batterie configurée pour alimenter le dispositif de communication (100) en énergie électrique, dans lequel les données de gestion comprennent un indicateur de statut de batterie indiquant un statut de batterie de la batterie.

5. Dispositif de communication (100) selon l'une quelconque des revendications 1 à 4, dans lequel le dispositif de communication (100) comprend un récepteur de système de navigation mondiale par satellite, GNSS, configuré pour déterminer une position géographique du dispositif de communication (100), dans lequel les données de gestion comprennent un indicateur de position indiquant la position géographique du dispositif de communication (100).

6. Dispositif de communication (100) selon la revendication 5, dans lequel le récepteur de système de navigation mondiale par satellite, GNSS, est configuré pour fonctionner dans un mode d'acquisition de position, et dans lequel le processeur d'application (103) est configuré pour maintenir un fonctionnement dans le mode d'économie d'énergie, PSM, pendant un fonctionnement du récepteur de système de navigation mondiale par satellite, GNSS, dans le mode d'acquisition de position.

7. Dispositif de communication (100) selon l'une quelconque des revendications précédentes, dans lequel le processeur d'application (103) est configuré pour lancer un changement entre le mode d'exécution et le mode d'économie d'énergie, PSM, sur la base d'un indicateur de changement de mode fourni par le programme d'application.

8. Dispositif de communication (100) selon l'une quelconque des revendications précédentes, comprenant en outre :
une enclave de sécurité configurée pour authentifier le dispositif de communication (100) à l'intérieur du réseau de communication sans fil ;
dans lequel l'enclave de sécurité comprend la mémoire (101) du dispositif de communication (100).

9. Système de communication (200) destiné à communiquer sur un réseau de communication, le système de communication (200) comprenant un :
un dispositif de communication (100) selon l'une quelconque des revendications 1 à 8 ;
un premier dispositif de communication voisin (201) configuré pour transmettre des données de relais à destination du dispositif de communication (100) sur le réseau de communication sans fil ; et
un deuxième dispositif de communication voisin (203) configuré pour recevoir les données de relais en provenance du dispositif de communication (100) sur le réseau de communication sans fil.

10. Système de communication (200) selon la revendication 9, comprenant en outre :
un troisième dispositif de communication voisin (205) ;
dans lequel le deuxième dispositif de communication voisin (203) est configuré pour transmettre les données de relais à destination du troisième dispositif de communication voisin (205) sur le réseau de communication sans fil.

11. Système de communication (200) selon la revendication 9 ou 10, dans lequel le réseau de communication est un réseau de communication sans fil de dispositif à dispositif, D2D, à plusieurs sauts.

12. Procédé (300) de fonctionnement d'un dispositif de communication (100) destiné à communiquer sur un réseau de communication sans fil, dans lequel le dispositif de communication (100) comprend une mémoire (101), un processeur d'application (103), un capteur (401), et une interface de communication (105), dans lequel la mémoire (101) comprend une portion de données d'application pour mémoriser des données d'application, une portion de données de relais pour mémoriser des données de relais, et une portion de données de gestion pour mémoriser des données de gestion, dans lequel le processeur d'application (103) est configuré pour fonctionner dans l'un d'un mode d'exécution et d'un mode d'économie d'énergie (PSM), dans lequel l'interface de communication (105) est configurée pour fonctionner dans un mode de relais et dans un mode de transmission de données de gestion, dans lequel le processeur d'application (103) est configuré pour maintenir un fonctionnement dans le mode d'économie d'énergie, PSM, pendant un fonctionnement de l'interface de communication (105) dans le mode de relais et dans le mode de transmission de données de gestion, le procédé (300) comprenant :
la détection, par le capteur (401), d'un paramètre physique à proximité du dispositif de communication (100), dans lequel les données de gestion comprennent le paramètre physique ;
l'exécution (301), dans le mode d'exécution, par le processeur d'application (103), d'un programme d'application sur la base des données d'application ;
la réception (303), dans le mode de relais, par l'interface de communication (105), des données de relais en provenance d'un premier dispositif de communication voisin (201) sur le réseau de communication sans fil ;
la mémorisation (305), dans le mode de relais, par l'interface de communication (105), des données de relais dans la portion de données de relais ;
la lecture (307), dans le mode de relais, par l'interface de communication (105), des données de relais depuis la portion de données de relais ;
la transmission (309), dans le mode de relais, par l'interface de communication (105), des données de relais à destination d'un deuxième dispositif de communication voisin (203) sur le réseau de communication sans fil ;
la lecture, dans le mode de transmission de données de gestion, par l'interface de communication (105), des données de gestion depuis la portion de données de gestion ; et
la transmission, dans le mode de transmission de données de gestion, par l'interface de communication (105), des données de gestion à destination du deuxième dispositif de communication voisin (203) sur le réseau de communication sans fil.

13. Programme informatique destiné à réaliser le procédé (300) selon la revendication 12 lorsqu'il est exécuté sur un dispositif de communication (100).
